# EUROPÄISCHE PATENTSCHRIFT

(11) **EP 2 027 646 B1**
(45) Veröffentlichungstag und Bekanntmachung des Hinweises auf die Patenterteilung: **16.09.2009**
(21) Anmeldenummer: 07765455.6
(22) Anmeldetag: 15.06.2007
(51) Int. Cl.: H02M 1/12, H02P 29/00, H02M 7/493

(54) **ANSTEUERUNG MIT WECHSELRICHTERN BEI GERINGEN SCHALTVERLUSTEN**
DRIVING WITH INVERTERS WITH LOW SWITCHING LOSSES
EXCITATION AVEC DES ONDULEURS A FAIBLES PERTES PAR COMMUTATION

(30) Priorität: 15.06.2006 DE 102006027716
(43) Veröffentlichungstag der Anmeldung: 25.02.2009
(73) Patentinhaber: Lenze Drives GmbH, 32699 Extertal (DE)
(72) Erfinder: FRAEGER, Carsten, 31787 Hameln (DE)
(74) Vertreter: Leonhard, Frank Reimund
(86) Internationale Anmeldenummer: PCT/EP2007/055983
(87) Internationale Veröffentlichungsnummer: WO 2007/144431

(56) Entgegenhaltungen:
- EP-A- 1 575 156
- JP-A- 5 115 106
- US-A1- 2005 088 861

## Beschreibung

Die Erfindung befasst sich mit Umrichtern (Wechselrichtern, Puls- oder FrequenzUmrichtern) und mit der Ansteuerung von beispielsweise Maschinen; dies als Vorrichtung (Schaltungsanordnung) oder als Verfahren zur Speisung eines solchen magnetisch wirkenden Betriebsmittels im Sinne eines Transformators, eines Motors/Generators (allgemeiner: einer Maschine). Eine Ansteueranordnung betrifft die Regelung oder Steuerung der genannten Schaltungsanordnung.

An elektrisch betriebene Antriebe als Beispiel von "magnetisch wirkenden", elektrisch betreibbaren Betriebsmitteln, werden hohe Anforderungen gestellt, einmal hinsichtlich des Geräuschverhaltens und ein anderes Mal hinsichtlich der Regeldynamik, die von Frequenzumrichtern und Servo-Umrichtern als Wechselrichter ausgeht. Diese stellen einen von einer hohen Schaltfrequenz erzeugten Wechselstrom bereit, der bei Maschinen hoher Leistung, oberhalb von 10 kW bis 30 kW und insbesondere bei durchzugsbelüfteten Motoren, bei einer zu geringen Schaltfrequenz dazu führt, dass störende Geräuschpegel an den Motoren durch die Umrichterspeisung auftreten.

Um diese Geräuschpegel zu vermeiden oder zumindest zu senken, sind die Pulsfrequenzen (=Schaltfrequenzen) der Wechselrichter zu erhöhen, was gleichermaßen auch die Verlustleistung in diesen Wechselrichtern heraufsetzt, wenn sie hohe Lastströme der Maschinen zu schalten haben. Dies bei einer "hohen Schaltfrequenz", die oberhalb von z.B. 8 kHz liegen kann. Werden die Wechselrichter (Umrichter) mit dieser Frequenz geschaltet, können die Geräuschpegel in vertretbaren Grenzen gehalten werden, zu Lasten einer erhöhten Verlustleistung in den Umrichtern, die jeweils aus mehreren Zweigen bestehen, wobei zumeist bei dreiphasigen Maschinen mit drei magnetisch wirkenden und elektrisch gespeisten Wicklungen auch ein auf diese Wicklungen abgestimmter Umrichter mit drei Phasen Anwendung findet.

Werden hochdynamische Antriebe verwendet, z.B. Linearmotoren oder solche Motoren, die sich auf eine hohe Geschwindigkeit eines vorbeibewegten Bandes oder einer Bahn synchronisieren müssen, ist die hohe Pulsfrequenz nicht nur zur Herabsetzung der Geräuschpegel sinnvoll, sondern auch erforderlich, um eine schnelle Stromregelung dieser hochdynamischen Antriebe (als Vertreter von magnetisch wirkenden Betriebsmitteln) realisieren zu können.

Soll dieses erste oder das zweite oder das gemeinsame Ziel heute erreicht werden, sind hohe Schaltfrequenzen bei Wechselrichtern unausweichlich, führen dann auch bei hohen Ausgangsströmen zu hohen Schaltfrequenzen und einem hohen Kühlaufwand. Dieser hohe Aufwand entsteht dadurch, dass die Leistungshalbleiter, welche in den Zweigen des Wechselrichters jeweils die hohe Schaltfrequenz erfüllen, den hohen generatorischen oder motorischen Laststrom der Maschine bei der genannten hohen Frequenz zu schalten haben, so dass die Leistungshalbleiter, beispielsweise als Transistoren oder IGBT's, entsprechend dimensioniert und in der Kühlung oder in der Abführung der entstehenden Wärme entsprechend montiert sein müssen.

Das Variieren der Schaltfrequenz zur Verringerung der Störsignale und der Temperatur wird von JP-A 05 115 106 (Nissan Motor Co. Ltd.) beschrieben. Die Filterung von Umrichterströmen ist Gegenstand von EP-A 1 575 156 (Vacon Oyj) und US-A 2005/0088861 (Baumgart).

Es ist **Aufgabe der Erfindung,** eine effektive Schaltfrequenz eines Umrichters oder Wechselrichters für ein "magnetisch wirkendes" Betriebsmittel, beispielsweise eine elektrische Maschine nicht zu reduzieren, aber dennoch eine Reduzierung beim Kühlaufwand zu erreichen, insbesondere auch bei der Ansteuerung des Umrichters. Unter der Reduzierung des Kühlaufwandes möchte man dreierlei Anteile verstehen, einmal die Reduzierung der Entstehung der Wärme, dann die Reduzierung der notwendigen Ableitung der Wärme, beispielsweise durch die Form der Kühlkörper, und zum Dritten eine Reduzierung der zum Ableiten erforderlichen Fläche. Mit anderen Worten ist "der Aufwand zur Kühlung" für ordnungsgemäß angesteuerte und betriebene Leistungshalbleiter im Wechselrichter zu reduzieren. Kann das gemeinsam damit erreicht werden, dass die Schaltfrequenz nicht oder nicht wesentlich herabgesetzt werden muß, um die erzeugten Geräuschpegel an dem Betriebsmittel ebenfalls niedrig zu halten, so ergibt sich eine komplexe Aufgabenstellung, die zu lösen ist.

Gelöst wird diese Aufgabe durch die Merkmale des Geräte-Anspruchs 1 (Schaltungsanordnung) und des Verfahrens-Anspruchs 18 (Arbeitsverfahren).

Die Schaltungsanordnung hat zwei unterschiedlich arbeitende Frequenzumrichter (=Wechselrichter), die auch selbst physisch völlig unterschiedlich aufgebaut sind (Anspruch 1). Ihre Ansteuerung im Sinne einer Regelung/Steuerung ist als Ansteueranordnung umschrieben (Anspruch 21). Diese Ansteueranordnung besitzt zumindest einen Regler. Eine vergleichbare Ansteueranordnung besitzt zwei Stromregler, welche die Schaltungsanordnung (Anspruch 1) ansteuern und betreiben können. Eine Kombination aus der Schaltungsanordnung (Anspruch 1) mit einer Ansteueranordnung (Anspruch 22) ist ebenso möglich. Das beanspruchte Arbeitsverfahren (Anspruch 18) beinhaltet die Angabe der Schaltfrequenzen der beiden physisch unterschiedlichen Zweige nach Anspruch 1. Diese Übersicht soll zeigen, welche Erfindungen von den Ansprüchen erfasst sind.

Der Unterschied zum Stand der Technik liegt dabei weniger im verwendeten Schaltungskonzept der Umrichter, als in den eingesetzten Leistungshalbleitern und in der eingesetzten Schaltfrequenz, und demzufolge auch in einer für jeden Frequenzumrichter notwendigen Kühlmaßnahme.

Wenn der Fachmann von einem Frequenzumrichter, kurz: Umrichter, spricht, hat dieser zumindest ein, zwei oder drei Phasen, die jeweils von einem Zweig aus zumindest zwei Halbleitern gebildet werden (Anspruch 6). Ein Wechselrichter für die meist verwendeten dreiphasigen Maschinen (Anspruch 9) hat drei Stränge oder drei Phasen (Anspruch 3). Ebenso kann ein Transformator mit drei - oder mehr - Wicklungen als elektrisches Betriebsmittel mit magnetischer Wirkung betrieben werden. Die Nennung der zwei Stränge oder drei Stränge (Ansprüche 2 und 3) ist nicht abschließend, es können auch weitere Stränge noch hinzutreten, also vier und mehr Stränge, wobei jeder Strang einen ersten Zweig und einen zweiten Zweig aufweist und jeder dieser Zweige unterschiedliche Grenz-Betriebsfrequenzen aufweist.

Anspruch 1 umschreibt hier zumindest einen ersten Zweig eines ersten Frequenzumrichters, der nicht oberhalb von 5 kHz arbeitsfähig ist und dazu auch nicht ausgebildet ist, und umschreibt einen zweiten Zweig eines anderen Frequenzumrichters, der gerade dazu ausgebildet und arbeitsfähig ist, oberhalb dieser Frequenzgrenze zu arbeiten, insbesondere weit oberhalb davon (Anspruch 1, Anspruch 8, Anspruch 15).

Betrachtet man mehrere Paare dieses einen Zweigpaares aus erstem/zweitem Zweig zusammen (Anspruch 2, Anspruch 3), so entsteht ein mehrphasiger Frequenzumrichter (Anspruch 4, Anspruch 5), einer arbeitsfähig nur unterhalb der genannten Schaltgrenze und einer arbeitsfähig oberhalb der genannten Frequenzgrenze.

Der strukturelle Aufbau zumindest eines Strangs, den Anspruch 1 umschreibt, ist die Mindestvoraussetzung zur Abgabe eines einphasigen Wechselstroms für eine einphasige Last, beispielsweise eine Einphasen-Maschine, die eine Nennfrequenz aufweist. Der abgegebene Wechselstrom ist in der Lage, zumindest diese Nennfrequenz zu erfüllen.

Aufgrund der Ansteuerung kann die Ist-Frequenz des Strangs auch darunter oder darüber liegen, je nach Arbeitspunkt der Maschine. Meist liegt die Nennfrequenz unter 400 Hz. Sie erreicht nicht die Grenz-Schaltfrequenz des ersten Zweigs des ersten Frequenzumrichters (bleibt wesentlich geringer) und nie die des zweiten Zweigs des anderen Frequenzumrichters. Zumindest der Faktor 10 liegt zwischen der Betriebsfrequenz (im Sinne der Nennfrequenz) und der oberen Grenz-Schaltfrequenz des ersten Zweiges bzw. des ersten Umrichters (Anspruch 1, 18). Dies entspricht auch der Bemessung für eine gegebenenfalls anzugebende untere Grenzfrequenz des langsamer schaltenden Zweigs, vorzugsweise oberhalb von 500 Hz, bezogen auf eine gemittelte Schaltfrequenz über ein Periode der Grundwelle des Hauptstroms.

Mit der oberen Grenzfrequenz wird die physische Struktur und der strukturelle Aufbau eines gegenständlichen Wechselrichters umschrieben (Anspruch 1, 2 und 3). Ein entsprechendes Betriebsverfahren (Anspruch 18) kann dagegen angeben, dass diese Frequenzen tatsächlich auftreten, und zwar im Betrieb. Anspruch 18 umschreibt insoweit das tatsächliche Geschehen eines elektrisch betriebenen Betriebsmittels, das zumindest eine Wicklung aufweist und beispielsweise eine Maschine mit bevorzugt drei Wicklungen im Stator und/oder Rotor ist.

Orientiert man das Betriebsverfahren (Anspruch 18) an den Grenzfrequenzen, also an einer oberen Grenzfrequenz von 5 kHz, welche der erste Zweig nicht überschreitet (als Repräsentant eines ersten Frequenzumrichters) und einer höheren Schaltfrequenz des zweiten Zweiges (als Repräsentant des anderen Frequenzumrichters), so sind diese genannten Frequenzgrenzen keine solchen, die immer auftreten, wenn die Wechselrichter (Frequenzumrichter) arbeiten. Andererseits aber - im Sinne einer Grenzfrequenz - für den ersten Zweig eine obere Schranke. Für den zweiten Zweig ist im Betriebsverfahren keine obere Grenze vorgegeben, der zweite Zweig ist in der Lage, mit höheren Frequenzen zu schalten, muß aber nicht dauerhaft mit diesen höheren Frequenzen schalten. Es treten also während des Betriebs viele Frequenzen - abhängig vom Arbeitspunkt und von der Last - auf. Beim ersten Zweig sind diese Frequenzen nie oberhalb der ersten Frequenzgrenze. Bei dem zweiten Zweig können sie oberhalb, auch weit oberhalb dieser ersten Frequenzgrenze liegen; es können sich aber auch Schaltfrequenzen einstellen, welche darunter liegen, Hier soll sehr sorgfältig zwischen tatsächlich auftretenden Frequenzen und funktionell vorgegebenen, beanspruchten Frequenzgrenzen unterschieden werden, bezogen auf den Haupt-Wechselstrom und den Ergänzungs-Wechselstrom, welche überlagert zusammen den Summen-Wechselstrom ergeben.

Eine Ergänzung der einphasigen Betrachtung hin zu einer zweiphasigen Betrachtung (Anspruch 2, Anspruch 4, Anspruch 5) oder hin zu einer dreiphasigen Betrachtung (Anspruch 3, Anspruch 4, Anspruch 5) ist möglich und bildet dabei eigenständige Wechselrichter aus, wobei jeweils die ersten Zweige der einen Arbeitsfrequenz dem einen Wechselrichter zugeordnet sind und die zweiten Zweige der anderen Frequenz dem anderen, nicht gleichen Wechselrichter. Bei einer dreisträngigen Anordnung entstehen zwei eigenständige Wechselrichter für zwei unterschiedliche Grenz-Arbeitsfrequenzen, was die technische Umschreibung der "nicht gleichen" Frequenzumrichter ist. Dies gilt dann auch entsprechend für das Arbeitsverfahren (Anspruch 18).

Umschreibt man untere Grenzfrequenzen für z.B. den langsamer schaltenden Zweig (Anspruch 19), ist die Angabe gemittelter Frequenzen sinnvoll, zwecksmäßig orientiert an der Grundwelle es Haupt- oder Summenstroms. Das gilt auch für eine untere Grenzfrequenz des schneller schaltenden Zweigs (Anspruch 20).

Ohne den inneren Aufbau dieser beiden nicht gleichen Wechselrichter (Frequenzumrichter) zu verändern, können die Ausgangsströme der jeweils korrespondierenden Ausgangsklemmen über eine jeweilige Drossel miteinander gekoppelt werden, die eine Anzapfung besitzt, welche den Summenstrom (den überlagerten Strom) aus den unterschiedlichen Arbeitsfrequenzen der beiden im Parallelbetrieb zusammen geschalteten Zweige abgibt (Anspruch 7, Anspruch 17). Die Drossel verhindert, dass Ströme des einen Zweigs in den anderen Zweig fließen, vielmehr sollen beide Ströme der beiden Zweige über die (magnetische) Kopplung auf die Wicklung beispielsweise des Motors geleitet werden, in der sie sich überlagern (Anspruch 16).

Je zwei Zweige im Parallelbetrieb zur Bildung eines Strangs summieren die von ihnen erzeugten Ströme, einmal den Haupt-Wechselstrom des niedrig schaltenden Frequenzumrichters und einmal den Ergänzungs-Wechselstrom des höherfrequent arbeitenden Frequenzumrichters, so dass sich in dem von einem Zweig des einen und einem Zweig des anderen Frequenzumrichters gebildeten Summenstrom die Frequenzen überlagern (Anspruch 18). Der Geräuschpegel sinkt. Die thermische Beanspruchung des den Hauptstrom stellenden Umrichters sinkt.

In der Wicklung einer beispielsweise angeschlossenen Maschine entsteht durch die Ansteuerung der beiden Zweige ein Summen-Wechselstrom, der hochfrequenten Ripple aufweist, die der zweite Frequenzumrichter bereitstellt (Anspruch 12). Die Maschine ist also hinsichtlich des Geräuschpegels minimiert, kann hochdynamisch arbeiten, wobei andererseits die hohen Lastströme mit der nur geringeren Schaltfrequenz zu schalten sind, so dass in diesem Haupt-Frequenzumrichter auch eine entsprechend geringere Verlustleistung entsteht.

Die Zusammenschaltung der unterschiedlichen Frequenzumrichter, respektive zumindest je eines Zweigs dieser beiden nicht gleichen Frequenzumrichter sorgt für die Überlagerung dieser unterschiedlich ausgebildeten Ströme und ermöglicht es in der jeweiligen Wicklung der Maschine beide Wechselströme so zu überlagern, dass ein Parallelbetrieb entsteht, der geringe Verlustleistung mit geringer Geräuschentwicklung zu paaren vermag (Anspruch 13).

Die beiden Frequenzen der beiden Zweige der beiden unterschiedlichen Frequenzumrichter können deutlich auseinander liegen, beispielsweise oberhalb des Faktors 2 (Anspruch 8, Anspruch 15), insbesondere im Bereich zwischen siebenfacher und neunfacher Frequenz des "langsam" arbeitenden Zweigs des Frequenzumrichters (Anspruch 8). Das damit betriebene, mit Wicklung versehene Betriebsmittel oder die Eignung und Ausbildung des jeweiligen Frequenzumrichters zum Betreiben einer solchen beispielsweise Maschine liegt oberhalb von 10 kW, insbesondere oberhalb von 30 kW, was mit funktionellen Worten die Größe und die Leistungsfähigkeit der schaltenden Leistungshalbleiter in den Zweigen und deren zugehöriger Beschaltungseinrichtungen umschreibt (Anspruch 9).

Mit anderen Worten sind auch die Umschreibungen der Ausbildung und der Arbeitsfähigkeit eines jeweiligen Zweiges eines Frequenzumrichters und bei Vervielfachung der Zweige des dann gebildeten Frequenzumrichters aus beispielsweise drei Zweigen so zu verstehen, dass mit der "Ausbildung" die Bauteile und der jeweilige Aufbau der Zweige gemeint sind, also geeignet zur Stromlast und zur Ableitung von Wärme, und mit der "Arbeitsfähigkeit" die Ansteuerung angesprochen ist, die keine Frequenzen oberhalb bzw. unterhalb der genannten Grenze einstellt.

Der Fachmann versteht hierunter eine bestimmte Gattung von Frequenzumrichtern, einmal denjenigen, der nicht oberhalb von höchstens 5 kHz mit seinen Pulsfrequenzen zu arbeiten vermag und ausgebildet ist, einen vom Effektivwert hohen Wechselstrom zu erzeugen, der die wesentlichen Lastanteile des bspw. Motors oberhalb 10 kW übernimmt. Hingegen ist der zweite Frequenzumrichter so ausgebildet, bei einer wesentlich höheren Frequenz zu arbeiten und ist dabei nur so ausgebildet, geringere Lastanteile durch den Ergänzungs-Wechselstrom zu übernehmen.

Das Verhältnis dieser beiden Lasten und die Lastverteilung liegt im Bereich oberhalb von 5, insbesondere oberhalb von 10, gemessen an jeweiligen Effektivwerten der abgegebenen Ströme. In einem Beispiel kann gesagt werden, dass der mit geringerer Frequenz arbeitende Wechselrichter Ströme von bis zu 200 A bereitstellt und der Ergänzungs-Wechselstrom in der Größenordnung zwischen 20 A und 30 A beträgt.

Eine genauere Unterscheidung der beiden Zweige, des ersten Zweiges für die niedrigere Frequenz und des zweiten Zweiges für die höhere Frequenz, respektive der beiden Wechselrichter oder Umrichter mit mehreren ersten Zweigen und mehreren zweiten Zweigen, kann ebenso gegeben werden (Anspruch 10, Anspruch 11).

Die oberste Grenzfrequenz des langsamer schaltenden Frequenzumrichters kann auch nach unten verlagert werden, hin zu kleineren oberen Frequenzgrenzen, wie 4 kHz bis herab zu maximal 2 kHz. Der erste Zweig ist dann in seiner Schaltfrequenz stärker begrenzt. Entsprechend kann der zweite Zweig mit noch höherer Frequenz schalten (Anspruch 11). Dies oberhalb von 5 kHz bis zu 16 kHz. Aufgrund der Kombination des ersten und des zweiten Zweiges (Anspruch 10 und 11 gemeinsam) sind alle Kombinationen, die hier genannt werden, auch als offenbart anzusehen, also beispielsweise für den ersten Zweig nicht oberhalb von 4 kHz, und beim zweiten Zweig oberhalb von 15 kHz.

Bei einem Verhältnis der Frequenzen von Faktor 4, also 4 kHz und 16 kHz ergibt sich ein ganzzahliges Vielfaches, das auch auf andere Faktoren erweitert werden kann (Anspruch 15). Dies alles erneut mit der Maßgabe, dass es sich bei der umschriebenen Schaltungsanordnung um eine solche handelt, welche die Ausbildung und Fähigkeit besitzt, mit den genannten Frequenzen zu arbeiten (zweiter Zweig), oder nicht oberhalb der genannten kleineren Frequenzen arbeitsfähig zu sein (Anspruch 10).

In einem weiteren spezifischen Ausführungsbeispiel ist der Faktor der genannten Frequenz im Wesentlichen der Faktor 2 (Anspruch 8).

Die Zusammenschaltung der beiden Zweige (Phasen des einen und des anderen Frequenzumrichters) erfolgt über eine insbesondere mitten-angezapfte Drossel (Anspruch 7). Es entsteht ein "Strang" im beanspruchten Sinn, der eine Ausgangsphase eines normalen Umrichters mit den erfindungsgemäßen Vorteilen zu ersetzen vermag. Die Drossel kann als eine auf einem gemeinsamen Kern aufgebrachte Doppelwicklung ausgebildet sein, welche die beiden schaltenden Ausgänge des ersten und zweiten Zweiges voneinander entkoppelt und beide Ausgangsströme dieser beiden Zweige gemeinsam auf die Motorwicklung führt. Diese wiederum ist bei Wechselstrom-Maschinen mit einer Streuinduktivität und einer Hauptinduktivität abzubilden.

Der von dem "langsamen" Frequenzumrichter erzeugte Stromrippel, der die niedrige Frequenz aufweist und deshalb relativ groß und deutlich ausgebildet ist, wird durch den Ergänzungs-Wechselstrom kompensiert. Im Motor tritt nur noch der Stromrippel mit der hohen Frequenz in Erscheinung. Die Ergänzung erfolgt so, dass ein zumindest gleichmäßigerer Verlauf des Ist-Wertes des Ausgangsstroms erhalten wird, die Kompensation muß nicht vollständig sein, kann aber in wesentlichen Teilen erfolgen (Anspruch 12). Der Stromripple (der Wechselanteil auf der Grundwelle des Ausgangs-Wechselstroms) gibt den in der Maschine wirksamen Oberwellenanteil an, wobei die niedrigeren Oberwellen des Haupt-Wechselstroms dort nicht mehr auftreten (Anspruch 13).

Zur Ansteuerung des ersten und zweiten Zweiges wird zumindest ein Stromregler verwendet (Anspruch 21). Es entsteht eine Ansteueranordnung. Es kann aber auch ohne Stromregler so gearbeitet werden, dass ein entstehender Stromrippel des langsameren Wechselrichters (mit der niedrigeren Frequenz) durch ein angepasstes Pulsmuster des zweiten Zweigs (des Wechselrichters mit der höheren Frequenz) ausgeglichen, zumindest aber weitgehend kompensiert wird (Anspruch 14).

Bei dem für zwei Zweige, die einen Strang bilden (Anspruch 1), vorgesehenen zumindest einen, bevorzugt beiden Stromreglern ist eine Ansteuerung so vorgesehen, dass die Kompensation des niederfrequenten Stromrippels von der Reglerseite her vorgegeben wird. Die Regeldifferenz, welche der Haupt-Laststrom noch aufweist, im Vergleich zu der Führungsgröße als sein Stromsollwert, wird als Sollwert auf den Regler des schneller schaltenden Zweiges aufgeschaltet (Anspruch 21). Der Stromregler erhält also nur noch eine Regeldifferenz des ersten Stromreglers, welche Regeldifferenz dieser erste Regler aufgrund der inhärenten Beschränkung der Schaltfrequenz des ersten Zweigs nicht auszugleichen vermag.

Beide Stromregler (Anspruch 22) bleiben eigenständig, jeder regelt sein Stellglied, als den ersten Zweig (Merkmal (a) des Anspruchs 1) und den zweiten Zweig (Merkmal (b) des Anspruchs 1). Jeder der Regler hat einen eigenen Sollwert, welche vom Signal her nicht gleich sind.

Bei einem Regler für drei Stränge können bestimmte dieser Regler zusammengefasst werden. Bei einer Feldorientierung kann ein Stromregler vorgesehen sein, der nach einer Transformation aus dem Vektorraum die einzelnen Phasenströme ansteuert, zumindest den Haupt-Laststrom.

Bei der Steuerung des Stroms der beiden Zweige wird nicht der Ausgangsstrom des Strangs gemessen, also nicht der Summenstrom aus beiden Zweigen, sondern der Strom vor der Zusammenführung der Einzelströme der Zweige.

Eine gleichsinnig gewickelte Drossel, die zwei Wicklungsabschnitte besitzt, welche in gleichem Wicklungssinne auf einem Kern angebracht sind, hat einen Eingang für den Laststrom, der mit der niederen Frequenz erzeugt ist, und einen Eingang für den Ergänzungs-Laststrom, der mit der höheren Frequenz erzeugt wird (Anspruch 16). Eine elektrisch leitende Verbindung der anderen Enden der beiden Wicklungen bildet den Ausgang für den überlagerten Strom, welcher aus dem Strang als Summenstrom abgegeben wird.

Die so geschaltete, bevorzugt mitten-angezapfte Drossel mit Anzapfung sorgt dafür, dass sich die beiden Zweige eines jeweiligen Strangs nicht gegenseitig im inneren Maße wesentlich beeinflussen (Anspruch 17).

Die Baugröße der Drossel ist unkritisch. Sie ist an ihrem Zweck orientiert und ist in der Lage, die Höhe des Haupt-Ausgangsstroms des Strangs durchzulassen, und hierbei kaum oder sehr geringe Verluste entstehen zu lassen. Nachdem die Ströme in den beiden Wicklungen aus den beiden ungleichen Zweigen in der Höhe sehr unterschiedlich sind, können die Wicklungen im Querschnitt angepasst sein, müssen es aber nicht.

Es kann eine für den Hauptstrom angepasste Querschnittswahl der Wicklung erfolgen, die dann mitten-angezapft wird, um den Ausgangsanschluss des Strangs zu bilden (Anspruch 7, Anspruch 16, Anspruch 17) und bei der Steueranordnung.

Die Regler der Schaltungs-Ansteueranordnung können analog, digital oder programmtechnisch realisiert sein.

Ausführungs**beispiele** erläutern und ergänzen die beanspruchte Erfindung. Die Anwendung bei einem elektrisch betriebenen Betriebsmittel mit zumindest einer Wicklung (für eine magnetische Wirkung) erfolgt im Beispiel bei einem Motor.

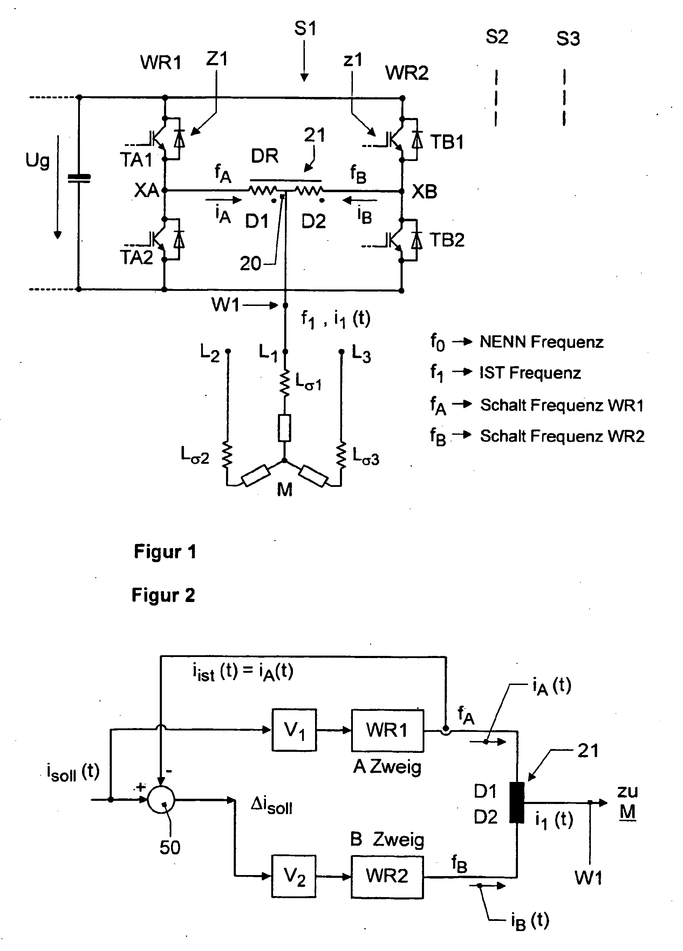

- **Figur 1**: veranschaulicht einen Strang S1, der einen ersten Zweig Z1 eines ersten Wechselrichters WR1 und einen ersten Zweig z1 eines zweiten Wechselrichters WR2 mit den zugehörigen Schaltelementen verdeutlicht. Ebenfalls dargestellt ist die zu versorgende Maschine (bspw. als Motor) mit drei Wicklungen, wobei die beiden dargestellten Zweige Z1,z1 den ersten Strang S1 bilden und die erste Wicklung L1 der Maschine M speisen. Nicht dargestellt, aber entsprechend ausgebildet sind auch die anderen beiden Stränge S2,S3, welche die anderen beiden Wicklungen L2, L3 des bspw. Motors M speisen. Auch hier sind jeweils ein erster und zweiter Zweig vorgesehen.
- **Figur 2**: zeigt eine regelungstechnische Schaltungsanordnung, welche den Strom in den beiden Zweigen Z1,z1 von Figur 1 regelt. Dargestellt ist ein Strang bzw. ein jeweiliger Zweig von zwei nicht gleichen Wechselrichtern WR1, WR2 und eine Ausgangsdrossel 21 sowie der Ausgangsstrom an dem Ausgangsanschluss W1, der zum Motor M führt. Die Figur 2 kann auch dreifach interpretiert werden, wenn in Feldkoordinaten geregelt wird.
- **Figur 3**: veranschaulicht schematisch einen Ausschnitt aus den beiden Strömen der einzelnen beiden Zweige Z1,z1, um diese Ströme in Drossel DR/21 zu einem Summenstrom zu überlagern.
- **Figur 4**: veranschaulicht den überlagerten Summenstrom i₁(t), der sich aus den beiden Teilströmen der Figur 3 ergibt, dem Haupt-Wechselstrom und dem Ergänzungs-Wechselstrom.

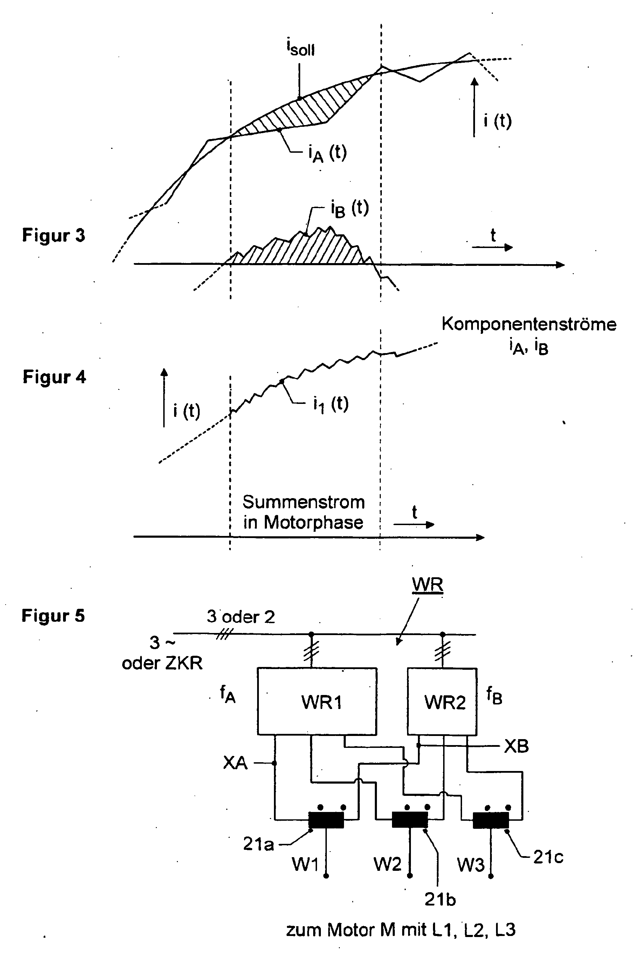

- **Figur 5**: zeigt ein Prinzipschaltbild mit zwei Wechselrichtern, einem Wechselrichter WR1 für einen hohen Strom bei niedriger Schaltfrequenz und einen zweiten Wechseltrichter WR2 für einen geringeren Strom bei höherer Schaltfrequenz, wobei die Ausgangsströme der drei jeweils dreiphasigen Wechselrichter über jeweils eine Drossel 21 a,21 b,21 c phasengleich überlagert werden und an drei Ausgangsanschlüssen W1, W2 und W3 zur Verfügung stehen, um einen Motor mit einer entsprechenden Anzahl von Wicklungen L1,L2,L3 (oder den jeweiligen Eingangsklemmen zu diesen Wicklungen) zugeführt werden zu können, alternativ auch einem Transformator.
- **Figur 6a, Figur 6b**: zeigen zeitgetreu untereinander jeweils 20 msec einer ganzen Periode des Stroms i_{A} von Figur 3 und des überlagerten Stroms i₁(t) von Figur 4.
- **Figur 7a, Figur 7b**: ist eine jeweilige Vergrößerung der beiden Ströme aus den vorigen Figuren 6a, 6b.

Die Zusammenschau der **Figur 5** und der **Figur 1** gibt einen Überblick über die Organisation der Pulswechselrichter und das Ansteuerverfahren, mit dem die symbolisch dargestellte Maschine M, im Ausführungsbeispiel ein Motor als hochdynamischer Servomotor gespeist wird.

Die Maschine versteht sich im Sinne eines Motors oder Generators und hat im dargestellten Beispiel der Figur 1 drei Wicklungen, die entweder als Wicklung L1, L2 und L3 oder durch ihre Anschlüsse (Eingangsklemmen) repräsentiert sind. Jede Wicklung weist symbolisch eine Induktivität und einen Widerstand auf. Der Motor M ist beispielsweise im Stern geschaltet.

Einer jeweiligen Wicklung wird ein Strom i₁(t) zugeführt. Die gezeigte Schaltungsanordnung von zwei Wechselrichtern, einem Wechselrichter für höhere Stromwerte und mit Haupt-Leistungsübertragung, wie er als Wechselrichter WR1 in Figur 5 gezeigt ist und eines zweiten Wechselrichters WR2 für geringere Stromwerte bei allerdings höherer Schaltfrequenz soll so umschrieben werden, dass zunächst die Übersicht anhand der Figur 5 gegeben wird, um dann nur einen Zweig von jeweils beiden Wechselrichtern zu erklären, die in der Figur 1 zusammengeschaltet sind.

Der Zweig Z1 gehört zum Wechselrichter WR1 und der Zweig z1 gehört zum Wechselrichter WR2. Ihre Ausgangsklemmen XA bzw. XB werden über eine Drossel 21, auch DR genannt, zusammengeschaltet und der fließende Strom überlagert, wobei diese Drossel eine Mittenanzapfung 20 besitzt. Die Wicklung ist gleichsinnig auf denselben Kern so gewickelt ist, dass eine Gegenkopplung entsteht und der Strom aus dem ersten Zweig Z1 nicht in den zweiten Zweig z1 fließt, bzw. auch umgekehrt. Der überlagerte Strom i₁(t) fließt aus der Mittenanzapfung 20 zum Ausgangsanschluss W1 und wird dem Motor an der ersten Wicklung L1 zugeführt.

In entsprechender Weise gilt dies auch für eine Schaltungsanordnung S2, S3 und deren Zweige der beiden Wechselrichter WR1 und WR2 von Figur 5, die aber hier nicht gesondert dargestellt sind, sondern vom Fachmann entsprechend mitgelesen werden.

Die beiden Wechselrichter WR1 und WR2 können entweder über einen Zwischenkreis ZKR gespeist werden oder sie sind an ein Wechselstromnetz angeschlossen, bevorzugt ist die Variante des gemeinsamen Zwischenkreises mit der Spannung Ug.

Die drei Drosseln 21 a,21 b und 21c der drei Stränge von Figur 5 entsprechen der Drossel 21 von Figur 1, so dass im Folgenden nur von dieser Drossel DR bzw. 21 gesprochen werden soll, wenn Strang S1 erklärt wird.

Der Wechselrichter (beispielsweise Frequenzumrichter oder andere mit höherer Frequenz schaltende Umrichter), der sich aus den beiden Wechselrichtern WR1 und WR2 zusammensetzt und von der Klemmenseite W1,W2,W3 vom Benutzer aus "gesehen" wird, speist den Motor M. Der eine Wechselrichter WR1 arbeitet mit einer kleinen Schaltfrequenz, z.B. bei 2 kHz und sorgt für die Haupt-Leistungsübertragung zum angeschlossenen Motor M. Der zweite Wechselrichter WR2 arbeitet mit einer hohen Schaltfrequenz, z.B. bei 16 kHz und sorgt dafür, dass der vom ersten Wechselrichter belassene Stromrippel von 2 kHz kompensiert wird und im Motor nur noch ein Stromrippel mit der höheren Frequenz von beispielsweise 16 kHz in Erscheinung tritt.

Eine weitere Aufgabe kommt dem zweiten Wechselrichter WR2 zu. Sie liegt in der hochdynamischen Stromregelung, die der erste Wechselrichter WR1 aufgrund seiner geringen Schaltfrequenz von unter 5 kHz, beispielsweise auch unter 2 kHz nicht wahrnehmen kann. Die Geschwindigkeiten der Stromrippel einer Erzeugerfrequenz von oberhalb von 5 kHz, beispielsweise oberhalb von 10 kHz, bis hin zu Frequenzen oberhalb von 15 kHz, erreichen die dynamische Stromregelung.

Die beiden Zweige Z1 und z1 jeweils eines der beiden genannten nicht gleichen Wechselrichter, die in unterschiedlichen Frequenzbereichen schalten, werden über die Drossel 21 (oder DR) miteinander verbunden, wobei eine die Mittenanzapfung 20 der Drossel 21 den Ausgangsanschluss W1 (die "Klemme") eines Strangs S1 des Gesamt-Wechselrichters WR bildet, der aus den beiden Wechselrichtern gemäß Figur 5 gebildet wird. Die beiden Zweige gemäß Figur 1 sind über diese Drossel mit einer Wicklung L1 des Motors verbunden. In dieser Konstellation treten für die hohen Schaltwechsel zur Leistungsübertragung nur geringe Schaltverluste bei bis zu 2 kHz auf. Schaltverluste entstehen dagegen bei der hohen Schaltfrequenz von oberhalb 5 kHz, sie werden aber durch den kleinen notwendigen Ergänzungsstrom dieses Zweigs z1 bzw. des Wechselrichters WR2 nicht groß werden, was die Komponentenströme der **Figur 3** (unten) oder der Summenstrom nach **Figur 4** zeigen.

Die Stromregelung dieser hochdynamischen Regelanordnung der beiden genannten Wechselrichter von Figur 5 erfolgt gemäß Figur 2, wobei hier zur Vereinfachung der Erläuterung ein Strang bzw. seine Stromregelung dargestellt ist. Das verbindende Element bildet die Drossel 21 mit ihren beiden Wicklungen D1,D2 und ihrem Ausgang W1. Die Erklärung zum Strang S1 ist auf die anderen Stränge S2,S3 (oder weitere) übertragen.

Die hochdynamische Regelung des Motorstroms erfolgt durch Vorgabe eines Sollwertes des Stromes iₛₒₗₗ(t), welcher dem ersten Stromregler V1 in **Figur 2** vorgegeben wird. Er steuert den ersten Wechselrichter WR1, zumindest einen seiner ersten Zweige, von denen einer in Figur 1 mit Z1 dargestellt ist. Dieser Zweig ist auch A-Zweig genannt, aufgrund der Schaltfrequenz fA, die unterhalb von 5 kHz gelegen ist und in besonderen Anwendungen unterhalb von maximal 3 kHz, insbesondere im Bereich von maximal 2 kHz liegen kann. Der erste Stromregler ist aufgrund dieser Frequenzbeschränkung nicht in der Lage, dem Stromsollwert so zu folgen, dass der Istwert hochdynamisch nachgeführt wird. Demzufolge erbringt die Strommessung, welche den Istwert als Strom i_{A}(t) misst, einen deutlichen Regelfehler, der in Figur 3 im oberen Bild schraffiert dargestellt ist. Diese Regeldifferenz wird durch Differenzbildung 50 zwischen dem tatsächlich gemessenen Strom i_{A}(t) mit der kleinen Schaltfrequenz und dem sehr genau vorgegebenen Sollwert iₛₒₗₗ(t) ermittelt und bildet einen zweiten Sollwert Δiₛₒₗₗ(t), welcher dem zweiten Stromregler V2 des zweiten Wechselrichters vorgegeben wird, der den Ergänzungs-Wechselstrom i_{B}(t) liefert und ebenfalls der Drossel 21 zuspeist.

Die Zusammenschaltung bzw. die Überlagerung dieser Ströme in der Drossel 21 führt dazu, dass ein Regler V1 die Hauptlast steuert und übernimmt, aber ungenau regelt und der zweite Regler V2 die Ergänzungslast beiträgt, und dabei die Genauigkeit des Summenstroms i₁(t) sicherstellt.

Beide Stromregler können in üblicher Weise ausgebildet sein, sind hier symbolisch als V1,V2 gezeigt, haben auch zumeist Integralanteile, um die Regeldifferenz im stationären Zustand Null zu machen. Jeder Stromregler oder jeder Wechselrichter ist für sich gegengekoppelt. Jeder regelt "eigenständig". Die entsprechende Regelschleife des Stroms i_{A} und i_{B} ist für jeden Zweig (ersten und zweiten) oder für jeden Wechselrichter WR1, WR2 vorhanden, nur nicht bildlich in Figur 2 dargestellt. Er entspricht einem gängigen Stromregler der Antriebstechnik, der den Fachmann nicht gesondert erklärt werden muss.

Bereits erwähnt wurde, aber betont werden soll erneut, dass die beiden Frequenzen f_{A} und f_{B} der beiden Wechselrichterzweige Z1 und z1 nicht gleich sind, insbesondere deutlich voneinander abweichen, und in einer einfachen Umschreibung oberhalb bzw. unterhalb einer Grenze von 5 kHz liegen.

Bevorzugte Ausführungsbeispiele von deutlichen Abweichungen sind oberhalb von 10 kHz für den höherfrequent schaltenden Wechselrichter WR2 und maximal 4 oder 3 kHz für den niederfrequenter schaltenden Wechselrichter; die Abstände können aber weiter vergrößert werden, so dass der mit hoher Frequenz schaltende Wechselrichter oberhalb von 10 kHz liegt, insbesondere oberhalb von 15 kHz, hingegen der mit niederer Frequenz schaltende Wechselrichter maximal im Bereich von 2 kHz arbeitsfähig ist und entsprechend ausgebildet ist.

Das Ergebnis der **Figur 3** zeigt einen Ausschnitt eines sinusartig ansteigenden Sollstroms iₛₒₗₗ(t), einen mit der niederen Frequenz geschalteten Haupt-Laststrom i_{A}(t) mit einer entsprechenden Regeldifferenz, die schraffiert abgebildet ist. Der zweite Komponentenstrom, der durch die Regelung der **Figur 2** und die dort dargestellte Sollwert-Führung Δiₛₒₗₗ(t) hinzugenommen wird, sorgt für den Ausgleich der starken Regelabweichung und erreicht einen Summenstrom i₁(t), wie er an der Mittenanzapfung 20 der Drossel DR/21 oder 21 a für die eine Wicklung des Motors M abgegeben werden kann. Dieser "Summenstrom" nach **Figur 4** (der überlagerte Strom) ist der eigentliche Ausgangsstrom dieses ersten Stranges S1, beinhaltend zwei Zweige Z1,z1, und die zugehörige Regelung nach Figur 2. Er wird von einer Last an der Klemme W1 "gesehen". Die Zusammenschaltung der Wechselrichter WR1/WR2 wirkt nach außen so, wie ein in der Schaltfrequenz hoher, leistungsstarker Wechselrichter, der einen geringen Kühlungsaufwand erfordert, gleichwohl hochdynamisch hinsichtlich der Stromregelung arbeiten kann.

Die beschriebene Zusammenschaltung kann so arbeiten, dass zwei käuflich erwerbliche Wechselrichter gemeinsam verwendet werden und in ihrer Sollwertführung und in ihren Ausgangsklemmen entsprechend über Drosseln 21 a,21 b,21 c verschaltet bzw. ergänzt werden.

Es müssen also keine neuen Wechselrichter entworfen und gebaut werden, sondern vorhandene Wechselrichter können eingesetzt werden, entsprechend angepasst und modifiziert nach den hier niedergelegten Ausführungsbeispielen.

Die genauere Beschreibung eines Zweiges eines Wechselrichters braucht hier nicht eingehend zu erfolgen, dazu kann auf den allgemeinen, dem Fachmann bekannten Stand der Technik verwiesen werden. Es soll kurz angerissen werden, dass in Figur 1 ein Zweig des ersten Wechselrichters WR1 einen oberen Schalttransistor TA1, einen unteren Schalttransistor TA2 und jeweilige Entlastungsdioden besitzt. Die Verbindungen von oberem Emitter und unterem Kollektor ist der Ausgang XA des ersten Zweiges Z1, der einen Strom abgibt, der mit der Schaltfrequenz f_{A} moduliert ist, welche Schaltfrequenz unter 5 kHz liegt. Dieser Strom i_{A}(t) ist in seiner Grundfrequenz aber deutlich unterhalb dieser Schaltfrequenz, und er entspricht dem Betriebsstrom der Maschine M, der in der Größenordnung bis 50 kHz oder bei dynamischen Stellvorgängen bis zu 400 Hz liegen kann, aber jedenfalls so deutlich von der oberen Frequenzgrenze f_{A} entfernt, dass diese Frequenz f_{A} jedenfalls in der Lage ist, den Betriebsstrom der Betriebsfrequenz des Motors zumindest annähernd nachzuführen, wie es im Beispiel an der Figur 3 (oberes Bild) gezeigt wird.

Der zweite Zweig z1 des nicht gleichen anderen Wechselrichters ist entsprechend geschaltet, nur mit anderen Typen von Leistungs-Halbleitern TB1,TB2, welche in der Lage sind, bei einer Schaltfrequenz f_{B} einen Ergänzungs-Wechselstrom i_{B}(t) abzugeben, dessen Rippel in der Größenordnung der Arbeitsfrequenz dieses Zweiges dieses Wechselrichters entspricht.

Dabei wäre noch zu unterscheiden, die Nenn-Frequenz f₀ der Maschine M oder eines Trafos und die Ist-Frequenz f₁ der Maschine oder des Trafos, welche der jeweils zugeführte Summenstrom i_{A}(t) als Grundwelle besitzt. Diese Ist-Frequenz ist lastabhängig und betriebsabhängig, die Nenn-Frequenz der Maschine gegeben. Die Ist-Frequenz f₁ kann oberhalb und unterhalb der Nenn-Frequenz der Maschine liegen, sie wird aber nicht in den Bereich der maximalen Schaltfrequenz f_{A} des ersten Wechselrichters (der mit geringerer Frequenz schaltet) und schon gar nicht in den Bereich der Schaltfrequenzen f_{B} des zweiten Wechselrichters (der mit der höheren Frequenz schaltet) kommen. Damit sind die Frequenzbereiche, die hier zur Erläuterung verwendet werden und bei denen man zuweilen auch von höher oder niedriger sowie größer oder kleiner spricht, bzw. auch den technischen Begriff der "wesentlichen höheren" Frequenz benutzt, umschrieben und für den Fachmann klar und verständlich.

Wird von einer Beschreibung eines Wechselrichters so ausgegangen, dass er arbeitsfähig und ausgebildet ist, mit Schaltfrequenzen von nicht höher als einer oberen Grenzfrequenz zu arbeiten, beispielsweise 5 kHz oder 4 kHz oder im Bereich von 2 kHz mit Bezug auf den Wechselrichter WR1 bzw. den ihm zugeordneten Zweig Z1, so soll damit fachmännisch ausgedrückt werden, dass die Leistungshalbleiter für eine solche Schaltfrequenz ausgewählt sind und die Ansteuerung so aufgebaut und ausgebildet ist, dass sie diese Schaltfrequenz auch nicht überschreitet. Die genaue Bauweise und der genaue Aufbau eines solchen Wechselrichters kann der Fachmann aus diesen funktionellen Angaben entnehmen. Natürlich können für einen solchen Wechselrichter auch Leistungshalbleiter verwendet werden, welche in der Lage sind, höhere Frequenzen zu schalten, nur wären dieser entsprechend teurer bzw. stärker zu kühlen. Man wählt also fachmännisch gesehen einen solchen Wechselrichter, der preisgünstig ist, mit Halbleitern bestückt ist, die gerade eine Grenzfrequenz zu schalten vermögen und daran angepasst eine Ansteuerung, welche mit zwei Reglern und den internen Pulsmustern der WR1,WR2 arbeitet, symbolisch in Figur 2 dargestellt.

Der A-Zweig, welcher dem Zweig Z1 der Figur 1 zugeordnet ist, ist für diese geringe Schaltfrequenz ausgebildet, die aber dennoch deutlich größer ist als die Nennfrequenz der anzuschließenden Maschine M und auch deutlich größer ist, als die für den Betrieb dieser Maschine zuweilen benötigen Ist-Frequenz der zugespeisten Wechselströme, beispielsweise bei hochdynamischen Steuerungsaufgaben oder bei Werkzeugmaschinen oder anderen, hochdynamische Stromregelungen und schnelle Regelvorgänge erfordernden Anwendungen. Solche Anwendungen sind z.B. ein Querschneider (Aufsynchronisierung auf eine Bahngeschwindigkeit) oder Druckmaschinen (bei einem Synchronlauf zu Druckmarken).

Die in Figur 5 gezeigte Alternative der Speisung der beiden Wechselrichter WR1,WR2 über entweder ein mehrphasiges Wechselsystem (als beispielsweise Dreiphasennetz) oder einen gemeinsamen Zwischenkreis, ist in der Figur 1 für das Beispiel des Zwischenkreises mit der Zwischenkreis-Spannung Ug dargestellt und aus diesem Zwischenkreis, der beiden Wechselrichtern WR1,WR2 gemeinsam sein kann, werden alle Zweige dieser Wechselrichter gespeist.

Dargestellt in Figur 1 der erste Zweig des ersten Wechselrichters WR1 und ein Zweig des zweiten Wechselrichters WR2, der dieser Phase des zu erzeugenden Wechselsystems entspricht, im Beispiel demjenigen, welcher der Motorwicklung L1 zugeführt wird. Entsprechend wird L2,L3 gespeist.

Die Begriffe der "Phase" sind hier so zu verstehen, dass es einen Zweig gibt, der im Lastteil des Wechselrichters eine individuelle Einheit bildet und gemeinsam mit einem anderen Zweig des zweiten Wechselrichters ein Strang S1 bildet, der nach außen wie ein neuer Wechselrichter wirkt, bei Blick von der Ausgangsklemme W1. Dieser Strang speist dann die erste Wicklung des Rotors oder Stators der Maschine M. Eine Phase ist sinngemäß dann die an W1 abgegebene Wechselspannung oder der abgegebene Wechselstrom mit der Ist-Frequenz f₁, welche Phase bei drei entsprechend ausgebildeten Phasen zu einem Dreiphasen-System zusammenkommt. Um die Verwirrung mit dieser "Phase" zu vermeiden, werden die beiden Zweige der Figur 1 als Strang benannt, die im Parallelbetrieb arbeiten und nicht gleichen Frequenzumrichtern zugehörig sind. Sie werden als erster Strang S1 bezeichnet, dem zugehörig auch noch die Steuerung bzw. Ansteuerung nach Figur 2 zugewiesen ist, um die Stromregelung der beiden von den beiden Zweigen z1,Z1 abgegebenen Wechselströme vorzunehmen, und diese in der zwischengeschalteten Drossel DR zu überlagern.

Aus der Funktion der beiden Komponentenströme i_{A} und i_{B} der Figur 3 kann entnommen werden, dass der höherfrequente Stromanteil, welcher der Ergänzungsstrom ist, den entstehenden Stromrippel des ersten Komponentenstroms, der dem Haupt-Wechselstrom entspricht, zu kompensieren vermag. Diese Kompensation muß nicht vollständig sein, sondern kann im wesentlichen dazu führen, dass ein gleichmäßigerer Verlauf des Wechselstrom-Istwertes entsteht, wie er möglichst nahe an dem Sollwert iₛₒₗₗ(t) liegt, so dass ein Summenstrom, der auch der überlagerte Strom genannt wird, gemäß Figur 4 entsteht.

Der vom Motor nur noch gesehene Rippel und die zugehörig stark gedämpften Geräusche werden mit einem geringeren Aufwand erreicht, als wenn ein Haupt-Umrichter der Leistungskategorie des Motors ausgewählt wird, welcher die hohe Schaltfrequenz zu schalten in der Lage ist, also beide Leistungsgrenzen erfüllen muß, den Nennstrom des Motors und die für ein geringes Geräusch und eine hohe Dynamik erforderliche hohe Schaltfrequenz.

Dieser Vergleich zeigt, dass sich Gewichte und Preise von zwei kleineren Umrichtern in Summe gesehen als günstiger ergeben, als Gewicht und Preis eines großen Umrichters mit beiden Grenzwerten bei Strom und Schaltfrequenz. Zusätzlich können bei einer Zusammenführung von zwei nicht gleichen Wechselrichtern Ersparnisse erreicht werden, die durch nur noch eine Steuerelektronik, nur noch eine Netzeinspeisung und ein gemeinsames Gehäuse zutage treten. Weiter kann berücksichtigt werden, dass Optimierungspotentiale durch eine gezielte Auslegung des Leistungsteils des Wechselrichters WR1 (desjenigen mit der niedrigen Schaltfrequenz) ausgeschöpft werden können. Hier können gezielt kostengünstige Leistungshalbleiter verwendet werden, um einen deutlichen Kosten- und Gewichtsvorteil zu erzielen, aber kein schlechteres Geräuschverhalten und auch keine Einbuße bei der Regeldynamik.

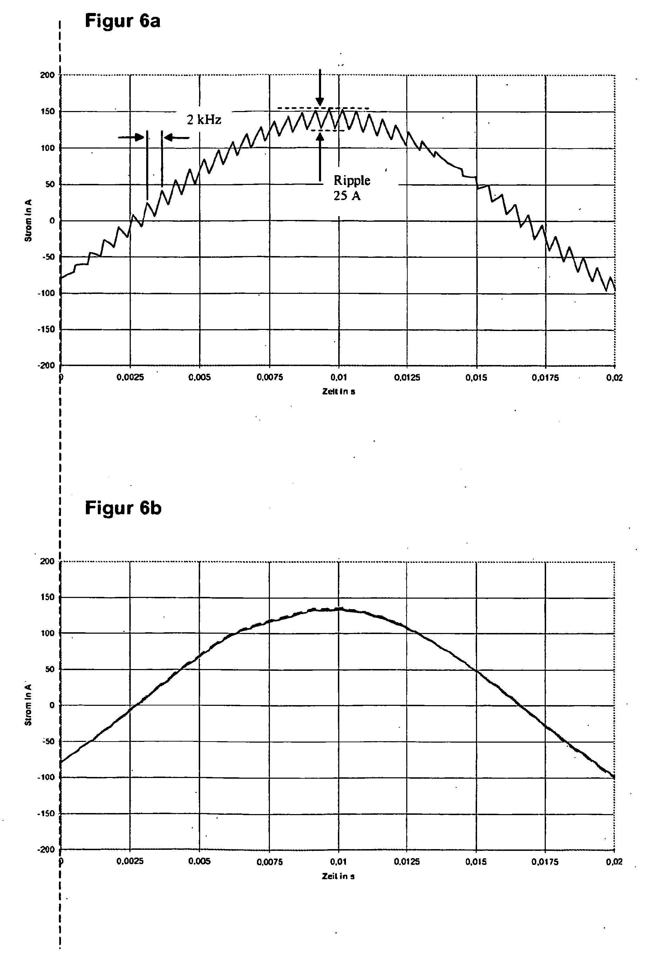

**Figur 6a** zeigt eine ganze Periode des in Figur 3 nur in einem kurzen Abschnitt symbolisierten Stromverlaufs. Es ist der Strom i_{A}(t), welcher mit der geringen Frequenz des ersten Wechselrichters WR1 bzw. des ersten Zweiges Z1 geschaltet entsteht. Ein relativ großer Stromrippel mit bis zu 25 A ist zu erkennen, bei einer maximalen Schaltfrequenz von etwa 2 kHz, welches dem einen der zuvor beschriebenen Ausführungsbeispiele entspricht. Die konkreten Werte des Stromverlaufs sind so, dass eine Maschine von einer Nennleistung 55 kW bei einem Nennstrom von 100 A betrieben wurde. Die Frequenz der Grundwelle liegt in der Größenordnung von 35 Hz. Die maximale Schaltfrequenz des leistungsstarken Wechselrichters WR1 ist ohne weiteres zu erkennen. Wird ein hochfrequenter Wechselstrom i_{B}(t) überlagert, der eine Schaltfrequenz bei 16 kHz hat, ergibt sich als Summen-Ausgangsstrom eines Strangs (für eine Klemme der Maschine M) der Verlauf von **Figur 6b****.** Es sind keine Stromrippel der niedrigen Frequenz mehr zu erkennen, sie werden ausgeglichen durch die Regelung der Figur 2 mit der hochfrequenten Schaltfrequenz des zweiten Wechselrichters WR2 bzw. des zweiten Zweiges z1, deren Strom über die Drossel 21 dem Haupt-Summenstrom von Figur 6a überlagert wird.

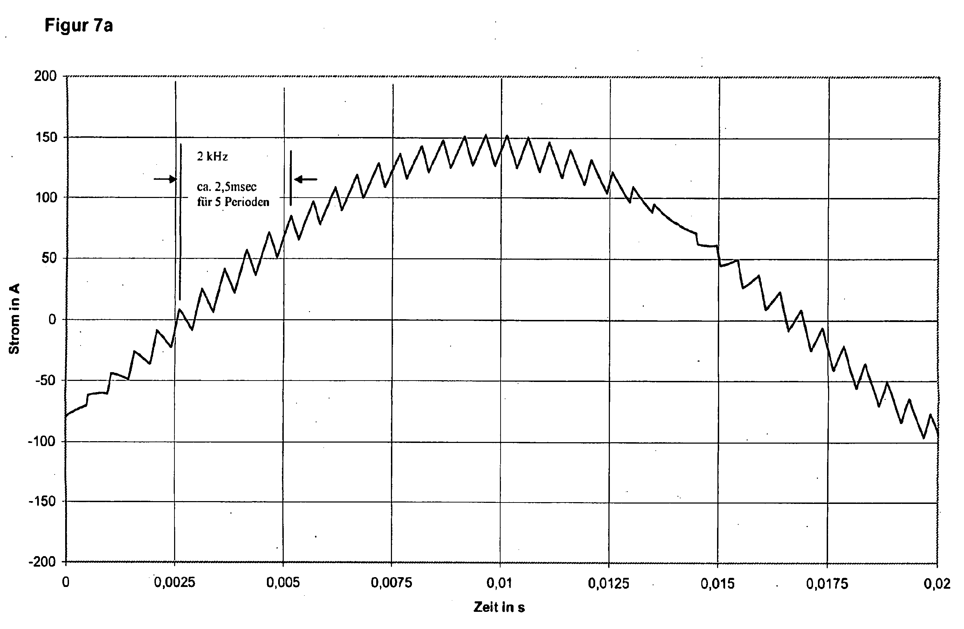

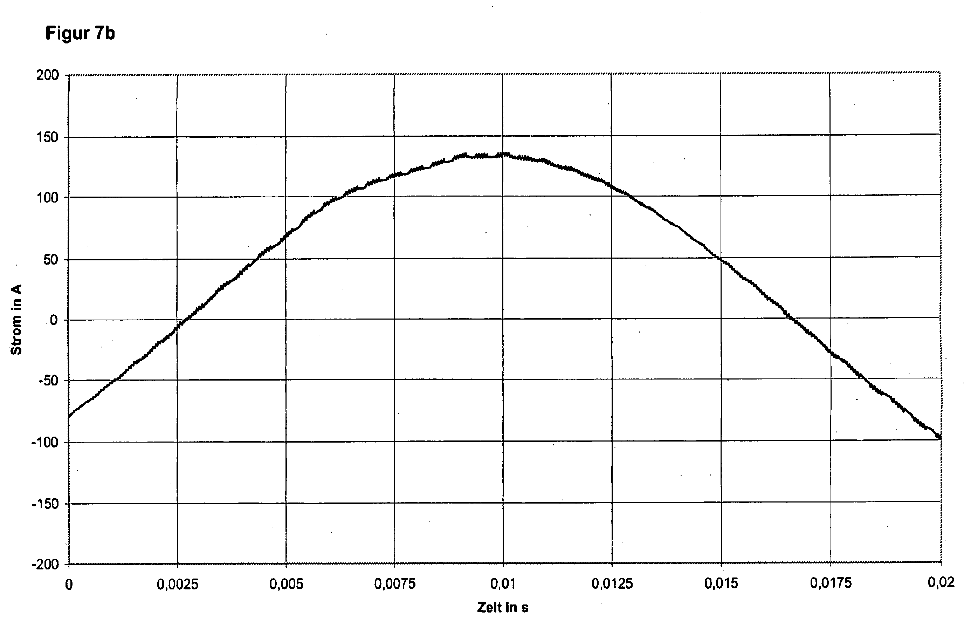

Die **Figur 7a** zeigt die Vergrößerung der Figur 6a mit größer dargestellter Zeitbasis. In der Figur 7a ist eine Ausschnittsvergrößerung der Figur 6a gezeigt, mit einer Angabe von fünf Perioden zwischen den Zeitpunkten 2,5msec und 5msec. Daraus errechnet sich eine Frequenz des ersten Zweiges Z1 des Wechselrichters WR1 von ca. 2 kHz. Wird der Strom des zweiten, mit höherer Frequenz schaltenden Wechselrichters WR2 und seinem Zweig z1 addiert, und gelangen sie gemeinsam in die Wicklung L1, so ergibt sich der beruhigte Strom nach Figur 6b, in der Aufschnittsvergrößerung nach Figur 7b. Dieser Strom hat nur noch geringe Rippel, wie insbesondere im Vergleich beim Zeitpunkt 10msec gegenüber der Figur 7a ersehen werden kann. Die vertikalen Achsen sind gleich beziffert, in allen Figuren 6a bis 7b, wobei Figur 6a, 7a den Strom i_{A} und Figur 6b, 7b den Strom i₁(t) darstellt.

Der Leistungsfluss am Ausgang der zwei Zweige z1 und Z1 hängt von der Einstellung des Wechselrichters WR1 ab (A-Zweig). Ist der WR1 so eingestellt, dass er einen Strom liefert, der immer unter dem Sollwert des Stromes liegt, fließt im WR2 ein Strom, der immer den Gesamtstrom gegenüber dem Strom des WR1 anhebt, so dass der Sollwert erreicht wird. Dabei wird kein Strom vom WR1 zurückgespeist.

Anders ist die Situation wenn der Strom des WR1 um den Sollwert herum schwankt und damit zeitweise größer als der Sollwert ist, wie mit dem Rippel in Figur 7a gezeigt. In diesem Fall wird zeitweise auch Strom und Leistung in den WR2 zurückgespeist. Die Leistung ist im Mittelwert etwa Null, da ja zeitweise Leistung abgegeben und zeitweise aufgenommen wird.

Ist der WR1 so eingestellt, dass er immer, auch mit dem Rippel, einen zu großen Strom liefert, arbeitet der WR2 immer dagegen an und nimmt Leistung auf.

Da die beiden Wechselrichter vorzugsweise gemäß Figur 1 an einem gemeinsamen Gleichspannungs-Zwischenkreis Ug betrieben werden, wird eine ggf. aufgenommene Leistung eines Zweigs oder Wechselrichters über den Zwischenkreis dem anderen Zweig oder Wechselrichter wieder zur Verfügung gestellt und damit an die Last gegeben. Diese aufgenommene Leistung ist also nicht verloren, sondern wird nur einmal im Kreis geleitet (über den Zwischenkreis ausgeglichen).

In einem anderen Ausführungsbeispiel braucht keine dynamische Drehzahlregelung oder keine dynamische Momenten-Regelung vorgesehen zu sein. Dann wird der zweite Wechselrichter WR2 synchron zum ersten Wechselrichter WR1 angesteuert. Ein passendes Pulsmuster kann für eine Elimination der Stromrippel mit der geringeren Pulsfrequenz im Motor sorgen.

Bevorzugt ist aber die hochdynamische Regelung des Stroms durch eine Stromstellung, die so aufgebaut wird, wie Figur 2 es erläutert. Das Pulsmuster ergibt sich dabei im zweiten Wechselrichter WR2 von selbst. Das Auffüllen des Rippels nach Figur 3 (obere Funktion) ist durch die Schaltung und Signalführung erreicht.

Bei Stromreglern wird der Fehler aus der Speisung des ersten Wechselrichters WR1 dem zweiten Wechselrichter als Sollwert vorgegeben, und von diesem durch die höherfrequente Ansteuerung im Stellglied ausgeglichen, wobei der dynamischere Strom als zweite Stromkomponente i_{B}(t) im günstigsten Falle vollständig, zumindest aber im wesentlichen kompensiert wird.

## Patentansprüche

1. **Schaltungsanordnung** zur Speisung eines magnetisch wirkenden, und elektrisch betreibbaren Betriebsmittels, insbesondere einer elektrisch betriebenen Maschine (M) mit zumindest einer Rotor- oder Statorwicklung (L1,L2,L3), welche Schaltungsanordnung in zumindest einem ersten Strang (S1) aufweist
(a) einen ersten Zweig (Z1) eines Frequenzumrichters (WR1), ausgebildet und arbeitsfähig für/mit einer Schaltfrequenz von nicht höher als 5 kHz, zur Abgabe eines mit dieser Schaltfrequenz erzeugten Haupt-Wechselstroms wesentlich geringerer Betriebsfrequenz (f₁) an eine Wicklung (L1) des magnetisch wirkenden Betriebsmittels (M);
(b) einen zweiten Zweig (z1) eines anderen Frequenzumrichters (WR2), ausgebildet und arbeitsfähig mit/für eine zweite Schaltfrequenz von oberhalb 5 kHz zur Abgabe eines mit dieser Schaltfrequenz erzeugten Ergänzungs-Wechselstroms an dieselbe Wicklung (L1);
zur Bildung eines Parallelbetriebs des ersten und zweiten Zweigs (Z1,z1) der beiden nicht gleichen Umrichter in zumindest dem ersten Strang der Schaltungsanordnung, so dass in der Wicklung (L1) des Betriebsmittels beide Wechselströme (i_{A}(t);i_{B}(t)) der beiden Zweige (Z1,z1) als Summenstrom überlagerbar sind.

2. Schaltungsanordnung nach Anspruch 1, wobei zumindest ein weiterer Strang (S2) der Schaltungsanordnung entsprechend Anspruch 1 aufgebaut ist, zur Speisung einer zweiten Wicklung (L2) des elektrischen Betriebsmittels, insbesondere der Maschine (M).

3. Schaltungsanordnung nach Anspruch 2, wobei ein dritter Strang (S3) der Schaltungsanordnung aus zwei Zweigen von nicht gleichen Umrichtern vorgesehen ist, um eine dritte Wicklung (L3) des elektrischen Betriebsmittels, insbesondere der Maschine, mit einem dritten überlagerten Wechselstrom zu speisen.

4. Schaltungsanordnung nach Anspruch 2 oder 3, wobei die zwei bzw. drei ersten Zweige einem ersten Frequenzumrichter (WR1) zugeordnet sind, der in seinem Aufbau ausgebildet ist, nur unterhalb von 5 kHz arbeitsfähig zu sein, und von seiner Ansteuerung her ausgebildet ist, nur unterhalb derselben Frequenzgrenze arbeiten zu können.

5. Schaltungsanordnung nach Anspruch 2 oder 3, wobei die zwei bzw. drei zweiten Zweige einem zweiten Frequenzumrichter (WR2) zugeordnet sind, der in seinem Aufbau ausgebildet ist, oberhalb von 5 kHz arbeitsfähig zu sein, und von seiner Ansteuerung her ausgebildet ist, oberhalb derselben Frequenzgrenze arbeiten zu können.

6. Schaltungsanordnung nach Anspruch 1, wobei der erste und der zweite Zweig jeweils zumindest zwei - in Serie geschaltete - schaltende Leistungshalbleiter (TA1,TA2; TB1,TB2) aufweist, welche von einem Zwischenkreis (U_{g}) speisbar sind, um an ihrer Verbindungsstelle (XA,XB) den durch das Schalten erzeugbaren Wechselstrom (i_{A}(t),i_{B}(t)) abzugeben.

7. Schaltungsanordnung nach Anspruch 1 oder 6, wobei in einem Strang (S1) jeder Zweig (Z1,z1) über eine jeweils zugehörige Ausgangswicklung (D1,D2) einer dem Strang zugeordneten Drossel (DR) auf die jeweilige Wicklung (L1) des Betriebsmittels, insbesondere als Rotor- oder Statorwicklung (L1,L2,L3) einer Maschine arbeitet.

8. Schaltungsanordnung nach Anspruch 1, 2 oder 3, wobei die Schaltfrequenzen (f_{A},f_{B}) der beiden Zweige sich um zumindest den Faktor 2 unterscheiden, insbesondere ein Verhältnis der Schaltfrequenzen der beiden Zweige (z1,Z1) von zwischen 7 und 9 vorgesehen ist, oder die Schaltfrequenzen der beiden Zweige sich im Wesentlichen um den Faktor 2 unterscheiden.

9. Schaltungsanordnung nach einem der vorigen Ansprüche, wobei die elektrisch betriebene Maschine (M), welche von der Schaltungsanordnung anzusteuern ist, eine Leistung größer 10 kW besitzt; oder die Schaltungsanordnung ausgebildet und arbeitsfähig ist, eine solche Maschine (M) mit einer Nennleistung von oberhalb 10 kW zu betreiben, insbesondere oberhalb 30 kW.

10. Schaltungsanordnung nach Anspruch 1, wobei der erste Zweig (Z1) des einen Frequenzumrichters (WR1) nicht oberhalb von 4 kHz, insbesondere nur unterhalb von im Wesentlichen 3 kHz oder in einem Bereich bei 2 kHz arbeitsfähig ist.

11. Schaltungsanordnung nach Anspruch 10 oder 1, wobei der zweite Zweig (z1) des anderen Frequenzumrichters (WR2) oberhalb von 10 kHz, insbesondere oberhalb von 15 kHz oder in einem Bereich bei 16 kHz arbeitsfähig ist.

12. Schaltungsanordnung nach Anspruch 1 oder 2 oder 3, wobei der Zweig (z1) des mit höherer Frequenz arbeitsfähigen Frequenzumrichters, also der "zweite Zweig", angepasst ist, einen entstehenden Rippel im Strom des mit niedrigerer Frequenz arbeitsfähigen "ersten Zweigs" (Z1) des anderen Frequenzumrichters (WR1) zumindest im wesentlichen zu einem gleichmäßiger verlaufenden Wechselstrom-Istwert zu ergänzen, als abgegebenen Summenstrom des jeweilige Strangs (S1).

13. Schaltungsanordnung nach einem der vorigen Ansprüche, wobei der - von dem zumindest einem Strang (S1) der Schaltungsanordnung abgegebene - Summenstrom aus Haupt-Wechselstrom (i_{A}) und Ergänzungs-Wechselstrom (i_{B}) einen effektiven Stromrippel im Bereich der Frequenz des mit höherer Schaltfrequenz (f_{B}) arbeitenden Zweigs oder Frequenzumrichters (z1 ,WR2) besitzt.

14. Schaltungsanordnung nach Anspruch 1 oder 12 oder 13, wobei Pulsmuster zur Ansteuerung des zweiten Zweiges (z1) des anderen Frequenzumrichters so abgestimmt ist, dass ein entstehender Stromripple des vom ersten Zweig (Z1) des einen Frequenzumrichters (WR1) abgegebenen Haupt-Wechselstroms zumindest weitgehend kompensiert wird bzw. kompensierbar ist.

15. Schaltungsanordnung nach Anspruch 8, wobei die Schaltfrequenzen ein Verhältnis von 2ⁿ haben, wobei "n" eine ganze Zahl größer Eins ist.

16. Schaltungsanordnung nach Anspruch 1, wobei eine Drossel (DR;21) zwei gleichsinnig magnetisch gekoppelte Wicklungen (D1,D2) aufweist, die elektrisch leitend verbunden sind, um die mit verschiedener Frequenz (f_{A},f_{B}) erzeugten Ströme, den Haupt- und den Ergänzungs-Wechselstrom (i_{A},i_{B}) zu überlagern, so dass der Summenstrom (i₁(t)) als überlagerter Strom an der Verbindungsstelle (20) der magnetisch gekoppelten Wicklungen abgebbar ist.

17. Schaltungsanordnung nach Anspruch 1, wobei der Haupt- und der Ergänzungs-Wechselstrom einer Drossel (DR) mit Anzapfung (20) zuspeisbar sind, um an der Anzapfung (20) den Summenstrom für die zumindest eine Wicklung (L1,L2,L3) des Betriebsmittels abzugeben, insbesondere der elektrischen Maschine (M).

18. **Verfahren zum Betreiben einer Schaltungsanordnung** zur Speisung eines elektrisch betriebenen Betriebsmittels mit zumindest einer Wicklung (L1), wie eine Maschine (M) mit zumindest einer Rotor- oder Statorwicklung (L1,L2,L3), welche Schaltungsanordnung in zumindest einem ersten Strang (S1) aufweist
(a) einen ersten Zweig (Z1) eines Frequenzumrichters (WR1), ausgebildet und arbeitsfähig für/mit Schaltfrequenzen von nicht höher als 5 kHz, wobei ein mit diesen Schaltfrequenzen erzeugter Haupt-Wechselstrom an die zumindest eine Wicklung (L1) abgegeben wird;
(b) einen zweiten Zweig (z1) eines anderen Frequenzumrichters (WR2), ausgebildet und arbeitsfähig mit/für Schaltfrequenzen oberhalb 5 kHz, wobei ein mit diesen Schaltfrequenzen erzeugter Ergänzungs-Wechselstroms an dieselbe Wicklung (L1) abgegeben wird.;
wobei sich in der zumindest einen Wicklung (L1) des elektrisch betriebenen Betriebsmittels beide Wechselströme (i_{A}(t);i_{B}(t)) der beiden Zweige (Z1,z1) in einem Parallelbetrieb des ersten und zweiten Zweigs (Z1,z1) der beiden nicht gleichen Frequenzumrichter überlagern, für zumindest den ersten Strang (S1) der Schaltungsanordnung.

19. Verfahren nach Anspruch 18, wobei eine untere Grenzfrequenz des ersten Zweigs (Z1) im Mittel über eine Periode des Haupt-Wechselstroms (i_{A}(t)) zehnmal größer ist, als die Nennfrequenz des Haupt-Wechselstroms.

20. Verfahren nach Anspruch 18, wobei die untere Schaltfrequenz des zweiten Zweigs (z1) oberhalb von 10 KHz liegt, im Mittel über eine Periode des Haupt-Wechselstroms (i_{A}(t)).

21. **Ansteueranordnung** für eine Schaltungsanordnung nach zumindest einem der vorhergehenden Ansprüche 1 bis 17, und zur Regelung oder Steuerung eines Summenstroms (i₁),
- wobei für zumindest einen ersten Strang (S1) zumindest ein Stromregler (V1 ,V2) für den Strom mit der höheren Schaltfrequenz vorgesehen ist,
- wobei dem zumindest einen Stromregler (V2) für den Strom mit der höheren Schaltfrequenz eine Differenz zwischen einem Stromsollwert (iₛₒₗₗ) für einen ersten Strang (S1) und einem gemessenen Strom (i_{A}) am Ausgang des ersten Zweigs (Z1) und vor einer Drossel (DR,21) als Sollwert zuführbar ist oder zugeführt wird.

22. Ansteueranordnung nach Anspruch 21, wobei ein weiterer Regler (V1) für den Strom mit der geringeren Schaltfrequenz vorgesehen ist, und
- der weitere Regler (V1) für den Strom mit der geringeren Schaltfrequenz (f_{A}) der Stromsollwert (iₛₒₗₗ) für den ersten Strang (S1) als Sollwert zuführbar ist;
und jeder der beiden Stromregler (V1 ,V2) den Ausgangsstrom (i_{A},i_{B}) am ihm zugeordneten Zweig (z1,Z1) eigenständig nach seiner jeweiligen Sollwertvorgabe steuert oder regelt.

23. Ansteueranordnung nach Anspruch 21, wobei die beiden Ströme (i_{A},i_{B}), - gesteuert oder geregelt von dem einen oder den beiden Stromreglern (V1,V2) - über eine Drossel (DR;21; 21a,21b,21c) mit einer Anzapfung (20) zu dem Ausgang (W1) des Strangs (S1) als der Summenstrom (i₁) geführt werden.

## Claims

1. Circuitry for supplying a magnetically acting and electrically drivable operating means, in particular an electrically driven machine (M) having at least one rotor or stator winding (L1, L2, L3), which circuitry has, in at least one first lane (S1),
(a) a first branch (Z1) of a frequency converter (WR1), designed and operatable for/at a switching frequency of not higher than 5 kHz, for release of a main alternating current of considerably lower operating frequency (f₁) produced at this switching frequency to a winding (L1) of the magnetically acting operating means (M);
(b) a second branch (z1) of a further frequency converter (WR2), designed and operatable at/for a second switching frequency of above 5 kHz for release of a supplementary alternating current produced at this switching frequency to the same winding (L1);
wherein in a parallel operation of the first and second branch (Z1, z1) of the two non-identical converters, for at least the first lane of the circuitry and in the at least one winding (L1) of the operating means, both alternating currents (i_{A}(t); i_{B}(t)) of the two branches (Z1, z1) are superimposed as sum current.

2. Circuitry according to claim 1, wherein at least one further lane (S2) of the circuitry according to claim 1 is constructed for supplying a second winding (L2) of the electrical operating means, in particular of the machine (M).

3. Circuitry according to claim 2, wherein a third lane (S3) of the circuitry comprising two branches is provided by non-identical converters to supply a third winding (L3) of the electrical operating means, in particular of the machine, with a third superimposed alternating current.

4. Circuitry according to claim 2 or 3, wherein the two or three first branches are assigned to a first frequency converter (WR1), which in its construction is designed to be operatable only below 5 kHz, and as regards its activation is designed to be able to operate only below the same frequency limit.

5. Circuitry according to claim 2 or 3, wherein the two or three second branches are assigned to a second frequency converter (WR2), which in its construction is designed to be operatable above 5 kHz, and as regards it activation is designed to be able to operate above the same frequency limit.

6. Circuitry according to claim 1, wherein the first and the second branch has in each case at least two switching power semiconductors (TA1, TA2; TB 1, TB2) - connected in series - which can be supplied by an intermediate circuit (U_{g}) to release at its connecting point (XA, XB) the alternating current (i_{A}(t), i_{B}(t)) which can be produced by switching.

7. Circuitry according to claim 1 or 6, wherein in one lane (S1), each branch (Z1, z1) works, via a particular associated output winding (D1, D2) of a choke (DR) assigned to the lane, on the particular winding (L1) of the operating means, in particular as rotor or stator winding (L1, L2, L3) of a machine.

8. Circuitry according to claim 1, 2 or 3, wherein the switching frequencies (f_{A}, f_{B}) of the two branches differ by at least the factor 2, in particular a ratio of the switching frequencies of the two branches (z1, Z1) of between 7 and 9 is provided, or the switching frequencies of the two branches differ essentially by the factor 2.

9. Circuitry according to one of the previous claims, wherein the electrically driven machine (M), which is to be activated by the circuitry, has a power greater than 10 kW; or the circuitry is designed and can be operated to drive such a machine (M) at a nominal power of above 10 kW, in particular above 30 kW.

10. Circuitry according to claim 1, wherein the first branch (Z1) of the one frequency converter (WR1) cannot operate above 4 kHz, in particular can operate only below essentially 3 kHz or in a range at 2 kHz.

11. Circuitry according to claim 10 or 1, wherein the second branch (z1) of the other frequency converter (WR2) can be operated above 10 kHz, in particular above 15 kHz or in a range at 16 kHz.

12. Circuitry according to claim 1 or 2 or 3, wherein the branch (z1) of the frequency converter which can operate at higher frequency, that is the "second branch", is adapted to supplement a resulting ripple in the current of the "first branch" (Z1) of the other frequency converter (WR1) which can be operated at lower frequency at least essentially to form an alternating current actual value running more uniformly as released sum current of the particular lane (S1).

13. Circuitry according to one of the previous claims, wherein the sum current - released by the at least one lane (S1) of the circuitry - comprising main alternating current (i_{A}) and supplementary alternating current (i_{B}) has an effective current ripple in the range of the frequency of the branch or frequency converter (z1, WR2) operating at higher switching frequency (f_{B}).

14. Circuitry according to claim 1 or 12 or 13, wherein pulse pattern for activation of the second branch (z1) of the other frequency converter is tuned so that a resulting current ripple of the main alternating current released by the first branch (Z1) of the one frequency converter (WR1) is at least largely compensated or can be compensated.

15. Circuitry according to claim 8, wherein the switching frequencies have a ratio of 2ⁿ, wherein "n" is a whole number greater than one.

16. Circuitry according to claim 1, wherein a choke (DR; 21) has two windings (D1, D2) coupled magnetically in the same direction, which are connected in electrically conductive manner to superimpose the currents, the main and the supplementary alternating current (i_{A}, i_{B}), produced at different frequency (f_{A}, f_{B}) so that the sum current (i₁(t)) can be released as superimposed current at the connecting point (20) of the magnetically coupled windings.

17. Circuitry according to claim 1, wherein the main and the supplementary alternating current of a choke (DR) can be supplied with tapping (20) to release at the tapping (20) the sum current for the at least one winding (L1, L2, L3) of the operating means, in particular of the electric machine (M).

18. Process for driving circuitry for supplying an electrically driven operating means having at least one winding (L1), such as a machine (M) having at least one rotor or stator winding (L1, L2, L3) which circuitry has, in at least one first lane (S1),
(a) a first branch (Z1) of a frequency converter (WR1), designed and operatable for/at switching frequencies of not higher than 5 kHz,
wherein a main alternating current produced at these switching frequencies is released to the at least one winding (L1);
(b) a second branch (z1) of a further frequency converter (WR2), designed and operatable at/for switching frequencies above 5 kHz, wherein a supplementary alternating current produced at these switching frequencies is released to the same winding (L1);
wherein in the at least one winding (L1) of the electrically driven operating means, both alternating currents (i_{A}(t); i_{B}(t)) of the two branches (Z1, z1) are superimposed in a parallel operation of the first and second branch (Z1, z1) of the two non-identical frequency converters, for at least the first lane (S1) of the circuitry.

19. Process according to claim 18, wherein a lower limiting frequency of the first branch (Z1) on average over one cycle of the main alternating current (i_{A}(t)) is ten times greater than the nominal frequency of the main alternating current.

20. Process according to claim 18, wherein the lower switching frequency of the second branch (z1) lies above 10 KHz on average over one cycle of the main alternating current (i_{A}(t)).

21. Activation arrangement for circuitry according to at least one of the preceding claims 1 to 17, and for regulation or control of a sum current (i₁),
- wherein for at least one first lane (S1), at least one current regulator (V1, V2) is provided for the current with the higher switching frequency,
- wherein a difference between a theoretical current value (i_{theoretical}) for a first lane (S1) and a measured current (i_{A}) at the output of the first branch (Z1) and upstream of a choke (DR, 21) as a theoretical value can be supplied or is supplied to the at least one current regulator (V2) for the current with the higher switching frequency.

22. Activation arrangement according to claim 21, wherein a further regulator (V1) for the current with the lower switching frequency is provided, and
- the further regulator (V1) for the current with the lower switching frequency (f_{A}) the theoretical current value (i_{theoretical}) for the first lane (S1) can be supplied as a theoretical value;
and either of the two current regulators (V1, V2) controls or regulates the output current (i_{A}, i_{B}) at the branch (z1, Z1) assigned to it independently according to its particular theoretical value default.

23. Activation arrangement according to claim 21, wherein the two currents (i_{A}, i_{B}) - controlled or regulated by the one or the two current regulators (V 1, V2) - via a choke (DR; 21; 21a, 21b, 21c) with tapping (20) are passed to the output (W1) of the lane (S1) as the sum current (i₁).

## Revendications

1. Circuit destiné à l'alimentation d'un moyen de commande pouvant être commandé électriquement et agissant magnétiquement, en particulier d'une machine (M) fonctionnant à l'électricité avec au moins un enroulement de rotor ou de stator (L1, L2, L3), circuit qui comprend dans au moins une première ligne (S1)
(a) une première branche (Z1) d'un convertisseur de fréquence (WR1), réalisé et pouvant travailler pour/avec une fréquence de commutation non supérieure à 5 kHz, pour la fourniture d'un courant alternatif principal, produit avec cette fréquence de commutation, ayant une fréquence de travail (f₁) sensiblement plus basse, à un enroulement (L1) du moyen de commande (M) agissant magnétiquement;
(b) une deuxième branche (z1) d'un autre convertisseur de fréquence (WR2), réalisé et pouvant travailler avec/pour une deuxième fréquence de commutation supérieure à 5 kHz, pour la fourniture d'un courant alternatif complémentaire, produit avec cette fréquence de commutation, au même enroulement (L1);
dans lequel, dans un fonctionnement en parallèle de la première et de la deuxième branches (Z1, z1) des deux convertisseurs de fréquence non identiques, les deux courants alternatifs [i_{A}(t); i_{B}(t)] des deux branches (Z1, z1) sont superposés sous forme de courant cumulé pour au moins la première ligne du circuit et dans l'au moins un enroulement (L1) du moyen de commande.

2. Circuit selon la revendication 1, dans lequel est montée au moins une autre ligne (S2) du circuit selon la revendication 1, pour l'alimentation d'un deuxième enroulement (L2) du moyen de commande électrique, en particulier de la machine (M).

3. Circuit selon la revendication 2, dans lequel il est prévu une troisième ligne (S3) du circuit en deux branches de convertisseurs de fréquence non identiques, pour alimenter un troisième enroulement (L3) du moyen de commande électrique, en particulier de la machine, avec un troisième courant alternatif superposé.

4. Circuit selon la revendication 2 ou 3, dans lequel les deux ou trois premières branches sont associées à un premier convertisseur de fréquence (WR1), qui est conçu de façon à ne pouvoir travailler qu'en dessous de 5 kHz, et dont l'excitation est réalisée de telle manière qu'il ne puisse travailler qu'en dessous de cette même limite de fréquence.

5. Circuit selon la revendication 2 ou 3, dans lequel les deux ou trois deuxièmes branches sont associées à un deuxième convertisseur de fréquence (WR2), qui est conçu de façon à ne pouvoir travailler qu'au-dessus de 5 kHz, et dont l'excitation est réalisée de telle manière qu'il ne puisse travailler qu'au-dessus de cette même limite de fréquence.

6. Circuit selon la revendication 1, dans lequel la première et la deuxième branches présentent respectivement au moins deux semi-conducteurs de puissance à commutation (TA1, TA2; TB1, TB2) - montés en série -, qui peuvent être alimentés par un circuit intermédiaire (U_{g}) pour fournir à leur point de raccordement (XA, XB) le courant alternatif [i_{A}(t), i_{B}(t)] pouvant être produit par la commutation.

7. Circuit selon la revendication 1 ou 6, dans lequel, dans une ligne (S1), chaque branche (Z1, z1) travaille par un enroulement de sortie respectif (D1, D2) d'une bobine de blocage (DR) associée à la ligne sur l'enroulement respectif (L1) du moyen de commande, en particulier un enroulement de rotor ou de stator (L1, L2, L3) d'une machine.

8. Circuit selon la revendication 1, 2 ou 3, dans lequel les fréquences de commutation (f_{A}, f_{B}) des deux branches diffèrent d'au moins un facteur 2, il est prévu en particulier un rapport des fréquences de commutation des deux branches (Z1, z1) compris entre 7 et 9, ou les fréquences de commutation des deux branches diffèrent essentiellement du facteur 2.

9. Circuit selon l'une quelconque des revendications précédentes, dans lequel la machine (M) fonctionnant à l'électricité, qui doit être excitée par le circuit, possède une puissance supérieure à 10 kW; ou le circuit est réalisé et peut fonctionner pour commander une telle machine (M) avec une puissance nominale supérieure à 10 kW, en particulier supérieure à 30 kW.

10. Circuit selon la revendication 1, dans lequel la première branche (Z1) d'un premier convertisseur de fréquence (WR1) ne peut pas travailler au-dessus de 4 kHz, en particulier ne peut travailler qu'en dessous de 3 kHz ou dans une plage de l'ordre de 2 kHz.

11. Circuit selon la revendication 10 ou 1, dans lequel la deuxième branche (z1) de l'autre convertisseur de fréquence (WR2) peut travailler au-dessus de 10 kHz, en particulier au-dessus de 15 kHz ou dans une plage de l'ordre de 16 kHz.

12. Circuit selon la revendication 1 ou 2 ou 3, dans lequel la branche (z1) du convertisseur de fréquence pouvant travailler avec la fréquence la plus haute, donc la "deuxième branche", est adaptée pour compléter une ondulation apparaissant dans le courant de la "première branche " (Z1) pouvant travailler avec la fréquence la plus basse de l'autre convertisseur de fréquence (WR1) essentiellement jusqu'à une valeur réelle de courant alternatif circulant plus uniformément, comme courant cumulé produit par la ligne respective (S1).

13. Circuit selon l'une quelconque des revendications précédentes, dans lequel le courant cumulé - produit par l'au moins une ligne (S1) du circuit - composé du courant alternatif principal (i_{A}) et du courant alternatif complémentaire (i_{B}) présente une ondulation effective du courant dans la plage de la fréquence de la branche ou du convertisseur de fréquence (z1, WR2) travaillant avec la fréquence de commutation la plus élevée ((f_{B}).

14. Circuit selon la revendication, 1 ou 12 ou 13, dans lequel le schéma d'impulsions pour l'excitation de la deuxième branche (z1) de l'autre convertisseur de fréquence est accordé de telle manière qu'une ondulation de courant apparaissant dans le courant alternatif fourni par la première branche (Z1) d'un convertisseur de fréquence (WR1) soit ou puisse être au moins largement compensée.

15. Circuit selon la revendication 8, dans lequel les fréquences de commutation présentent un rapport de 2ⁿ, "n" étant un nombre entier supérieur à un.

16. Circuit selon la revendication 1, dans lequel une bobine de blocage (DR; 21) comprend deux enroulements (D1, D2) couplés magnétiquement dans le même sens, qui sont reliés de façon électriquement conductrice, pour superposer les courants produits avec une fréquence différente (f_{A}, f_{B}), le courant alternatif principal et le courant alternatif complémentaire (i_{A}, i_{B}), de telle manière que le courant cumulé [i₁(t)] puisse être fourni sous forme de courant superposé au point de raccordement (20) des enroulements couplés magnétiquement.

17. Circuit selon la revendication 1, dans lequel le courant alternatif principal et le courant alternatif complémentaire peuvent être envoyés à une bobine de blocage (DR) avec un branchement (20), pour fournir au branchement (20) le courant cumulé pour l'au moins un enroulement (L1, L2, L3) du moyen de commande, en particulier de la machine électrique (M).

18. Procédé d'utilisation d'un circuit destiné à l'alimentation d'un moyen de commande fonctionnant à l'électricité avec au moins un enroulement (L1), tel qu'une machine (M) avec au moins un enroulement de rotor ou de stator (L1, L2, L3), circuit qui comprend dans au moins une première ligne (S1)
(a) une première branche (Z1) d'un convertisseur de fréquence (WR1), réalisé et pouvant travailler pour/avec des fréquences de commutation non supérieures à 5 kHz, un courant alternatif principal produit avec ces fréquences de commutation étant fourni à l'au moins un enroulement (L1);
(b) une deuxième branche (z1) d'un autre convertisseur de fréquence (WR2), réalisé et pouvant travailler avec/pour des fréquences de commutation supérieures à 5 kHz, un courant alternatif complémentaire produit avec ces fréquences de commutation étant fourni à ce même enroulement (L1);
dans lequel on superpose, dans l'au moins un enroulement (L1) du moyen de commande fonctionnant à l'électricité, les deux courants alternatifs [i_{A}(t); i_{B}(t)] des deux branches (Z1, z1) dans un fonctionnement en parallèle de la première et de la deuxième branches (Z1, z1) des deux convertisseurs de fréquence non identiques, pour au moins la première ligne (S1) du circuit.

19. Procédé selon la revendication 18, dans lequel une première fréquence limite inférieure de la première branche (Z1) est, en moyenne sur une période du courant alternatif principal [i_{A}(t)], dix fois plus élevée que la fréquence nominale du courant alternatif principal.

20. Procédé selon la revendication 18, dans lequel la fréquence de commutation inférieure de la deuxième branche (z1) est supérieure à 10 kHz, en moyenne sur une période du courant alternatif principal [i_{A}(t)].

21. Système d'excitation pour un circuit selon au moins une des revendications précédentes 1 à 17, et pour la régulation ou la commande d'un courant cumulé (i₁),
- dans lequel il est prévu, pour au moins une première ligne (S1), au moins un régulateur de courant (V1, V2) pour le courant avec la plus haute fréquence de commutation,
- dans lequel une différence entre une valeur de consigne de courant (iₛₒₗₗ) pour une première ligne (S1) et un courant mesuré (i_{A}) à la sortie de la première branche (Z1) et avant une bobine de blocage (DR, 21) peut être fournie ou est fournie comme valeur de consigne à l'au moins un régulateur de courant (V2) pour le courant avec la plus haute fréquence de commutation.

22. Système d'excitation selon la revendication 21, dans lequel il est prévu un autre régulateur (V1) pour le courant avec la plus basse fréquence de commutation, et
- la valeur de consigne du courant (iₛₒₗₗ) pour la première ligne (S1) peut être fournie comme valeur de consigne à l'autre régulateur (V1) pour le courant avec la plus basse fréquence de commutation (f_{A});
et chacun des deux régulateurs de courant (V1, V2) commande ou régule, de manière autonome en fonction de sa valeur de consigne respective imposée, le courant de sortie (i_{A}, i_{B}) à la branche (Z1, z1) qui lui est associée.

23. Système d'excitation selon la revendication 21, dans lequel les deux courants (i_{A}, i_{B}) - commandés ou régulés par un ou les deux régulateurs de courant (V1, V2) - sont fournis au moyen d'une bobine de blocage (DR; 21; 21a, 21b, 21c) avec un branchement (20) à la sortie (W1) de la ligne (S1) sous forme de courant cumulé (i₁).
